# EUROPEAN PATENT APPLICATION

(11) **EP 3 715 205 A2**
(43) Date of publication of application: **30.09.2020**
(21) Application number: 20162448.3
(22) Date of filing: 11.03.2020
(51) Int. Cl.: B60W 40/068, B60W 30/18, B60W 50/14, B60L 15/32

(54) **ROAD SURFACE CONDITION ESTIMATION DEVICE**

(30) Priority: 27.03.2019 JP 2019061172
(71) Applicant: AISIN SEIKI KABUSHIKI KAISHA, Kariya-shi, Aichi-ken 448-8650 (JP); AISIN AW CO., LTD., Aichi-ken 444-1192 (JP)
(72) Inventor: NOMA, Hiroshi, KARIYA-SHI, AICHI-KEN, 448-8650 (JP); NIWA, Eiji, KARIYA-SHI, AICHI-KEN, 448-8650 (JP); KAWASAKI, Hiroaki, KOBE-SHI, HYOGO, 651-0072 (JP); MAEDA, Yusuke, KOBE-SHI, HYOGO, 651-0072 (JP); OGAWA, Fumiharu, ANJO-SHI, AICHI-KEN, 444-1192 (JP); KATO, Kazuhiro, KARIYA-SHI, AICHI-KEN, 448-8688 (JP)
(74) Representative: Cabinet Beau de Loménie

(57) **Abstract**

A road surface condition estimation device (200) includes a control circuit (201), an acquisition circuit (202) and an estimation circuit (203). The control circuit (201) is configured to control a driving device that is able to independently drive a plurality of wheels. The acquisition circuit (202) is configured to acquire detection results of a plurality of wheel speed sensors that detects rotation speeds of the plurality of wheels respectively. The estimation circuit (203) is configured to calculate a slip ratio for each driving wheel, based on a detection result of a first wheel speed sensor and a detection result of a second wheel sensor. The estimation circuit (203) is configured to estimate a friction coefficient for each region on a road surface that corresponds to the driving wheel, based on the slip ratio.

## Description

### BACKGROUND OF THE INVENTION

### 1. Field of the Invention

The disclosure relates to a road surface condition estimation device.

### 2. Description of Related Art

A technology of evaluating the friction coefficient of a road surface on which a vehicle travels has been studied. As such a technology, for example, there has been known a technology of calculating a slip ratio based on an average value of rotation speeds of two wheels that drive as a driving wheel and an average value of rotation speeds of two wheels that follow as a following wheel and estimating the friction coefficient of the road surface based on the slip ratio, in a two-wheel drive vehicle in which the two wheels that drive as the driving wheel and the two wheels that follow as the following wheel are previously decided.

### SUMMARY OF THE INVENTION

However, in the above related art, it is assumed that the numbers and positions of the driving wheels and the following wheels are fixed, and therefore the above related art cannot be directly applied to a so-called four-wheel independent drive vehicle for which the numbers and positions of the driving wheels and the following wheels can be changed in various ways.

Hence, the disclosure properly estimates the friction coefficient of the road surface, using the four-wheel independent drive vehicle.

An aspect of the invention is a road surface condition estimation device. The road surface condition estimation device includes a control circuit, an acquisition circuit and an estimation circuit. The control circuit is configured to control a driving device that is able to independently drive a plurality of wheels. The plurality of wheels is provided on a vehicle that travels on a road surface. The control circuit is configured to control the driving device such that some wheels of the plurality of wheels drive as a driving wheel and the other wheels of the plurality of wheels follow as a following wheel. The acquisition circuit is configured to acquire detection results of a plurality of wheel speed sensors that detects rotation speeds of the plurality of wheels respectively. The estimation circuit is configured to calculate a slip ratio for each driving wheel, based on a first detection result and a second detection result. The first detection result is a detection result of a first wheel speed sensor of the plurality of wheel speed sensors, the first wheel speed sensor detecting a rotation speed of the driving wheel, and the second detection result is a detection result of a second wheel speed sensor of the plurality of wheel speed sensors, the second wheels speed sensor detecting a rotation speed of the following wheel. The estimation circuit is configured to estimate a friction coefficient for each region on the road surface that corresponds to the driving wheel, based on the slip ratio.

With the above configuration, it is possible to properly estimate the friction coefficient of the road surface for each region corresponding to the driving wheel, using a four-wheel independent drive vehicle, regardless of the numbers and positions of the driving wheels and the following wheels.

In the road surface condition estimation device, the estimation circuit may be configured to calculate the slip ratio for each driving wheel, based on the respective rotation speeds of a plurality of the driving wheels acquired from the first detection result and an average value of the rotation speeds of a plurality of the following wheels acquired from the second detection result, when the plurality of driving wheels and the plurality of following wheels exist. With the above configuration, it is possible to easily calculate the slip ratio for each driving wheel by collectively considering the rotation speeds of the following wheels with the average and individually considering the rotation speeds of the driving wheels.

In the road surface condition estimation device, the acquisition circuit may be configured to acquire a third detection result. The third detection result may be a detection result of an in-vehicle sensor that detects information relevant to a traveling state of the vehicle, and the in-vehicle sensor may include the plurality of wheel speed sensors that detects the rotation speeds of the plurality of wheels respectively. The control circuit may be configured to decide the wheels that drive as the driving wheel and the wheels that follow as the following wheel, depending on the detection result of the in-vehicle sensor. With the above configuration, it is possible to properly decide the numbers and positions of the driving wheels and the following wheels, in consideration of the traveling state of the vehicle.

In the road surface condition estimation device, the control circuit may be configured to control the driving device such that a plurality of front-side wheels drives as the driving wheel in greater number than a plurality of rear-side wheels, when the detection result of the in-vehicle sensor indicates that the vehicle moves on an inclined surface as the road surface in a direction of going up. The front-side wheels may be included in the plurality of wheels and may be provided on the front side of the vehicle in a movement direction of the vehicle, and the rear-side wheels may be included in the plurality of wheels and may be provided on the rear side of the vehicle in the movement direction of the vehicle. The control circuit may be configured to control the driving device such that the plurality of rear-side wheels drives as the driving wheel in greater number than the plurality of front-side wheels, when the traveling state of the vehicle is a state where the vehicle moves on the inclined surface in a direction of going down. With the above configuration, at the time of going uphill, the front-side wheels drive as the driving wheel in greater number, and thereby a driving force is generated such that the vehicle is pulled from the front side. Therefore, it is possible to properly estimate the friction coefficient while stabilizing the behavior of the vehicle. Further, at the time of going downhill, the rear-side wheels drive as the driving wheel in greater number, and thereby a braking force is generated, for example, in regenerative braking, such that the vehicle is pulled from the rear side. Therefore, it is possible to properly estimate the friction coefficient while stabilizing the behavior of the vehicle.

In the road surface condition estimation device, the control circuit may be configured to control the driving device such that a plurality of outside wheels drives as the driving wheel in greater number than a plurality of inside wheels, when the third detection result indicates that the vehicle performs turning. The outside wheels may be included in the plurality of wheels and may be provided on the outside of the turning, and the inside wheels may be included in the plurality of wheels and may be provided on the inside of the turning. With the above configuration, the outside wheels generate a larger driving force than the inside wheels, and thereby it is possible to properly estimate the friction coefficient while stabilizing the behavior of the vehicle at the time of turning.

In the road surface condition estimation device, the control circuit may be configured to execute one of a first driving control and a second driving control, when the third detection result indicates that the vehicle goes straight. The first driving control may be a control of controlling the driving device such that at least two of a plurality of one-side wheels drive as the driving wheel, the one-side wheels being included in the plurality of wheels and being provided along a movement direction on one side of the vehicle in a right-left direction of the vehicle. The second driving control may be a control of controlling the driving device such that at least two of a plurality of other-side wheels drive as the driving wheel, the other-side wheels being included in the plurality of wheels and being provided along the movement direction on the other side of the vehicle in the right-left direction of the vehicle. With the above configuration, at least two of the plurality of the one-side wheels or at least two of the plurality of the other-side wheels drive as the driving wheel, and thereby it is possible to estimate the friction coefficient of the same position (region) twice and to increase the estimation accuracy of the friction coefficient.

In the road surface condition estimation device, the control circuit may be configured to control the driving device such that at least one of the plurality of the one-side wheels and at least one of the plurality of the other-side wheels drive as the driving wheel. The estimation circuit may be configured to estimate a first friction coefficient as the friction coefficient of a one-side region on the road surface that corresponds to the plurality of the one-side wheels and a second friction coefficient as the friction coefficient of an other-side region on the road surface that corresponds to the plurality of the other-side wheels. The control circuit may be configured to decide which of the plurality of the one-side wheels and the plurality of the other-side wheels drives as the driving wheel in greater number, depending on a magnitude relation between the first friction coefficient and the second friction coefficient. With the above configuration, for example, the driving wheel is disposed in greater number at a more slippery region that is of the one-side region and the other-side region and where the driving force that can be transmitted from a single driving wheel to the road surface is relatively smaller, than at a less slippery region that is of the one-side region and the other-side region and where the driving force that can be transmitted from a single driving wheel to the road surface is relatively larger. Thereby, it is possible to easily secure a necessary driving force while the necessary driving force is dispersed. Accordingly, it is possible to properly estimate the friction coefficient while stabilizing the behavior of the vehicle.

The road surface condition estimation device may further include an output circuit configured to output a predetermined notice through a notification circuit provided in the vehicle, depending on a result of comparison between the friction coefficient estimated by the estimation circuit and a threshold. With the above configuration, it is possible to easily output the notice to an occupant of the vehicle, depending on the result of the comparison between the friction coefficient and the threshold.

In the road surface condition estimation device, the estimation circuit may be configured to store the friction coefficient in a storage circuit, in association with position information relevant to a position of the region on the road surface that corresponds to the driving wheel. With the above configuration, it is possible to minutely know the friction coefficient of the road surface for each position.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is an exemplary and schematic block diagram showing a configuration of a vehicle according to an embodiment;
FIG. 2 is an exemplary and schematic block diagram showing functions of a road surface condition estimation device according to the embodiment;
FIG. 3 is an exemplary and schematic diagram showing an example of a manner of storage of a friction coefficient in a storage circuit according to the embodiment;
FIG. 4 is an exemplary and schematic diagram showing a first example of setting of a driving wheel and a following wheel that can be realized in the embodiment;
FIG. 5 is an exemplary and schematic diagram showing a second example of the setting of the driving wheel and the following wheel that can be realized in the embodiment;
FIG. 6 is an exemplary and schematic diagram showing a third example of the setting of the driving wheel and the following wheel that can be realized in the embodiment;
FIG. 7 is an exemplary and schematic diagram showing a fourth example of the setting of the driving wheel and the following wheel that can be realized in the embodiment; and
FIG. 8 is an exemplary and schematic flowchart showing a sequence of processes that is executed by the road surface condition estimation device according to the embodiment for estimating the friction coefficient of the road surface.

### DETAILED DESCRIPTION OF EMBODIMENTS

Hereinafter, an embodiment of the disclosure will be described based on the drawings. A configuration of the embodiment described below, and operations and effects caused by the configuration are just examples, and the disclosure is not limited to contents described below.

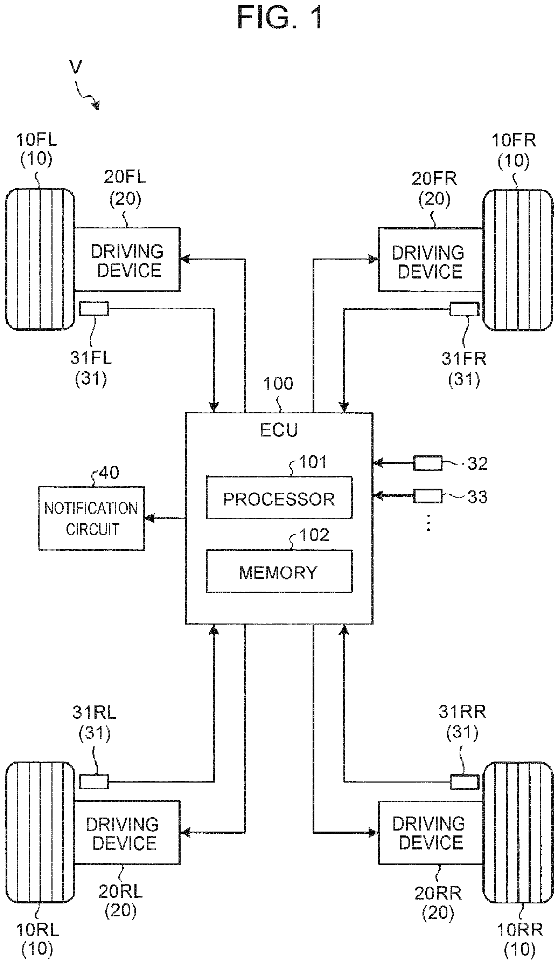

FIG. 1 is an exemplary and schematic block diagram showing a configuration of a vehicle V according to the embodiment. As shown in FIG. 1, the vehicle V according to the embodiment is configured as a four-wheel car including front wheels 10FL, 10FR and rear wheels 10RL, 10RR. Hereinafter, the front wheels 10FL, 10FR and the rear wheels 10RL, 10RR are collectively expressed as wheels 10, in some cases.

The vehicle V according to the embodiment is a so-called four-wheel independent drive car (electric car) for which the numbers and positions of driving wheels and following wheels can be arbitrarily set and altered.

That is, the vehicle V includes four driving devices 20 that are provided so as to correspond to the four wheels 10 respectively, and each driving device 20 is configured as a so-called in-wheel motor that can independently drive the corresponding wheel 10. The driving device 20 can cause the corresponding wheel 10 to drive as a driving wheel by giving a driving force to the corresponding wheel 10, and can cause the corresponding wheel 10 to follow as a following wheel by stopping the driving force that is given to the corresponding wheel 10.

More specifically, a driving device 20FL provided so as to correspond to the front wheel 10FL can cause the front wheel 10FL to drive as the driving wheel, and can cause the front wheel 10FL to follow as the following wheel, and a driving device 20FR provided so as to correspond to the front wheel 10FR can cause the front wheel 10FR to drive as the driving wheel, and can cause the front wheel 10FR to follow as the following wheel. Similarly, a driving device 20RL provided so as to correspond to the rear wheel 10RL can cause the rear wheel 10RL to drive as the driving wheel, and can cause the rear wheel 10RL to follow as the following wheel, and a driving device 20RR provided so as to correspond to the rear wheel 10RR can cause the rear wheel 10RR to drive as the driving wheel, and can cause the rear wheel 10RR to follow as the following wheel.

Further, the vehicle V includes an electronic control unit (ECU) 100 as a control device that integrally controls the above-described driving devices 20. The ECU 100 is configured as a microcomputer that includes the same hardware as an ordinary computer, for example, includes a processor 101, a memory 102, an input-output device (not illustrated) and the like.

In the example shown in FIG. 1, as a control object of the ECU 100, a notification circuit 40 is illustrated in addition to the driving devices 20. The notification circuit 40 is an information output device for giving information to an occupant of the vehicle V by an image or a voice (or both of the image and the voice). Details will be described later.

Here, in the control, the ECU 100 can use detection results of various in-vehicle sensor that are provided for detecting a traveling state of the vehicle V. For example, in the example shown in FIG. 1, as one of the in-vehicle sensors, there is provided a wheel speed sensor 31 that detects the rotation speed of the wheel 10.

A plurality of the wheel speed sensors 31 is provided so as to correspond to the plurality of wheels 10. That is, there are provided four wheel speed sensors 31: a wheel speed sensor 31FL that detects the rotation speed of the front wheel 10FL, a wheel speed sensor 31FR that detects the rotation speed of the front wheel 10FR, a wheel speed sensor 31RL that detects the rotation speed of the rear wheel 10RL, and a wheel speed sensor 31RR that detects the rotation speed of the rear wheel 10RR.

In the embodiment, in the control, the ECU 100 can use detection results of in-vehicle sensors other than the wheel speed sensor 31. In the embodiment, in the control, the ECU 100 can use a detection result of a steering sensor 32 as an in-vehicle sensor that detects a steering operation (amount) for the vehicle V, that is, detects whether the vehicle V is going straight or turning, and a detection result of a slope sensor 33 as an in-vehicle sensor that detects the slope of a road surface on which the vehicle V is traveling, that is, detects whether the vehicle V is traveling on a road surface having a slope. Details will be described later.

By the way, conventionally, a technology of evaluating the friction coefficient of the road surface on which the vehicle travels has been studied. As such a technology, for example, there has been known a technology of calculating a slip ratio based on an average value of rotation speeds of two wheels that drive as a driving wheel and an average value of rotation speeds of two wheels that follow as a following wheel and estimating the friction coefficient of the road surface based on the slip ratio, in a two-wheel drive vehicle in which the two wheels that drive as the driving wheel and the two wheels that follow as the following wheel are previously decided.

However, in the above related art, it is assumed that the numbers and positions of the driving wheels and the following wheels are fixed, and therefore the above related art cannot be directly applied to the four-wheel independent drive vehicle V in the embodiment for which the numbers and positions of the driving wheels and the following wheels can be changed in various ways.

Hence, the embodiment realizes a road surface condition estimation device 200 having functions described below, within the ECU 100, and thereby realizes a proper estimation of the friction coefficient of the road surface using the four-wheel independent drive vehicle V.

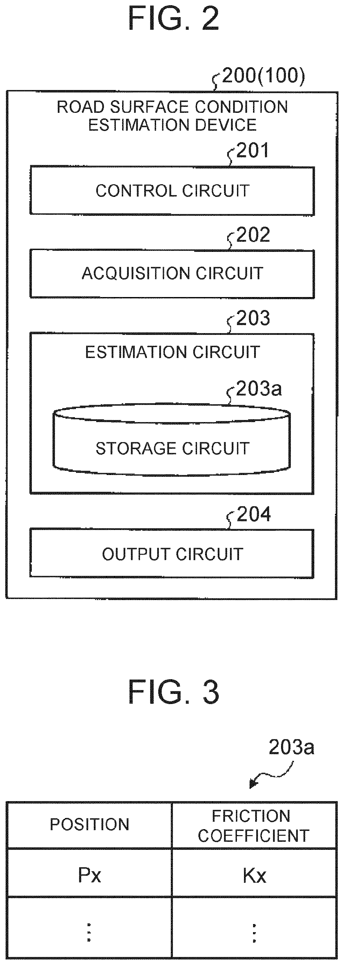

FIG. 2 is an exemplary and schematic block diagram showing the functions of the road surface condition estimation device 200 according to the embodiment. In the embodiment, the road surface condition basically means the friction coefficient of the road surface, and therefore the "road surface condition estimation device" can be restated as a "road surface friction coefficient estimation device".

As shown in FIG. 2, the road surface condition estimation device 200 includes a control circuit 201, an acquisition circuit 202, an estimation circuit 203, and an output circuit 204. For example, the functions are realized as results when the processor 101 of the ECU 100 reads and executes programs stored in the memory 102. In the embodiment, some or all of the functions may be realized by only dedicated hardware (circuit).

The control circuit 201 appropriately outputs a command value to each of the four driving devices 20, and controls the four driving device 20 such that some wheels of the four wheels 10 provided on the vehicle V drive as the driving wheel and the other wheels follow as the following wheel. In the embodiment, the control circuit 201 can control the four driving devices 20 such that all of the four wheels 10 drive as the driving wheel, but at least one wheel needs to follow as the following wheel for the estimation of the friction coefficient of the road surface.

The acquisition circuit 202 acquires the detection results of the four wheel speed sensors 31, the steering sensor 32 and the slope sensor 33 as the in-vehicle sensor.

The estimation circuit 203 calculates the slip ratio for each driving wheel based on the detection result of a first wheel speed sensor that is of the four wheel speed sensors and that detects the rotation speed of the driving wheel and the detection result of a second wheel speed sensor that is of the four wheel speed sensors and that detects the rotation speed of the following wheel, and estimates the friction coefficient of the road surface for each region corresponding to the driving wheel, based on the slip ratio. That is, the estimation circuit 203 estimates respective one or more friction coefficients of one or more regions on the road surface that correspond to the driving wheels, regardless of the way to set the numbers and positions of the driving wheels and the following wheels.

For example, in the case where the number of the driving wheels is two and the number of the following wheels is two, the estimation circuit 203 calculates two slip ratios based on the respective rotation speeds of the two driving wheels acquired from the detection results of two first wheel speed sensors and an average value of the rotation speeds of the two following wheels acquired from the detection results of two second wheel speed sensors, and estimates the friction coefficient of each of regions on the road surface that correspond to the two driving wheels, based on the two slip ratios.

Further, in the case where the number of the driving wheels is one and the number of the following wheels is three, the estimation circuit 203 calculates one slip ratio based on the rotation speed of the one driving wheel acquired from the detection result of one first wheel speed sensor and an average value of the rotation speeds of the three following wheels acquired from the detection results of three second wheel speed sensors, and estimates the friction coefficient of one region on the road surface that corresponds to the one driving wheel, based on the one slip ratio.

Furthermore, in the case where the number of the driving wheels is three and the number of the following wheels is one, the estimation circuit 203 calculates three slip ratios based on the respective rotation speeds of the three driving wheels acquired from the detection results of three first wheel speed sensors and the rotation speed of the one following wheel acquired from the detection result of one second wheel speed sensor, and estimates the friction coefficients of three regions on the road surface that correspond to the three driving wheels, based on the three slip ratios.

In this way, in the embodiment, the friction coefficient is estimated for each region on the road surface that corresponds to the driving wheel. Accordingly, with the embodiment, the friction coefficient is estimated multiple times, and the friction coefficient is associated with the position of the region. Thereby, it is possible to more minutely know the condition of the road surface.

Hence, in the embodiment, the estimation circuit 203 includes a storage circuit 203a for storing information, and stores the friction coefficient estimated by the estimation circuit 203, in the storage circuit 203a, in association with the position information relevant to the position of the region on the road surface that corresponds to the driving wheel. The position information is acquired based on the position of the vehicle V estimated by an odometry or the like using the detection result of the in-vehicle sensor, for example.

FIG. 3 is an exemplary and schematic diagram showing an example of a manner of the storage of the friction coefficient in the storage circuit 203a according to the embodiment. As shown in FIG. 3, the friction coefficient estimated by the estimation circuit 203 is stored in the storage circuit 203a, in association with the position (the position of the region on the road surface that corresponds to the driving wheel).

In the example shown in FIG. 3, only the correspondence relation between a friction coefficient Kx and a position Px is illustrated. However, in the embodiment, correspondence relations between friction coefficients other than the friction coefficient Kx and positions other than the position Px can be stored. Further, in the embodiment, for example, in the case where the friction coefficient corresponding to the region at the same position is estimated multiple times, it is possible to increase the estimation accuracy of the friction coefficient by correcting an old friction coefficient in consideration of a latest friction coefficient or updating the old friction coefficient to the latest friction coefficient.

In the embodiment, the configuration in which the correspondence relation between the friction coefficient and the position is stored in the storage circuit 203a within the estimation circuit 203 has been shown as an example. However, means for storing the correspondence relation between the friction coefficient and the position is provided in the exterior of the estimation circuit 203. For example, in the embodiment, the road surface condition estimation device 200 may have a communication function, and may send the correspondence relation between the friction coefficient and the position to a server provided as a storage circuit on a network, by the communication function, to store the correspondence relation between the friction coefficient and the position in the server. With this configuration, for example, it is possible to collect and manage friction coefficients estimated by a plurality of vehicles V, in the server on the network, together with the corresponding position.

Back to FIG. 2, the output circuit 204 outputs a predetermined notice through the notification circuit 40, depending on a result of comparison between the friction coefficient estimated by the estimation circuit 203 and a threshold. For example, in the case where at least one of one or more friction coefficients estimated by the estimation circuit 203 is smaller than the threshold, the output circuit 204 outputs a notice indicating a warning that the road surface (at least a partial region on the road surface) is slippery, to the occupant of the vehicle V, through the notification circuit 40.

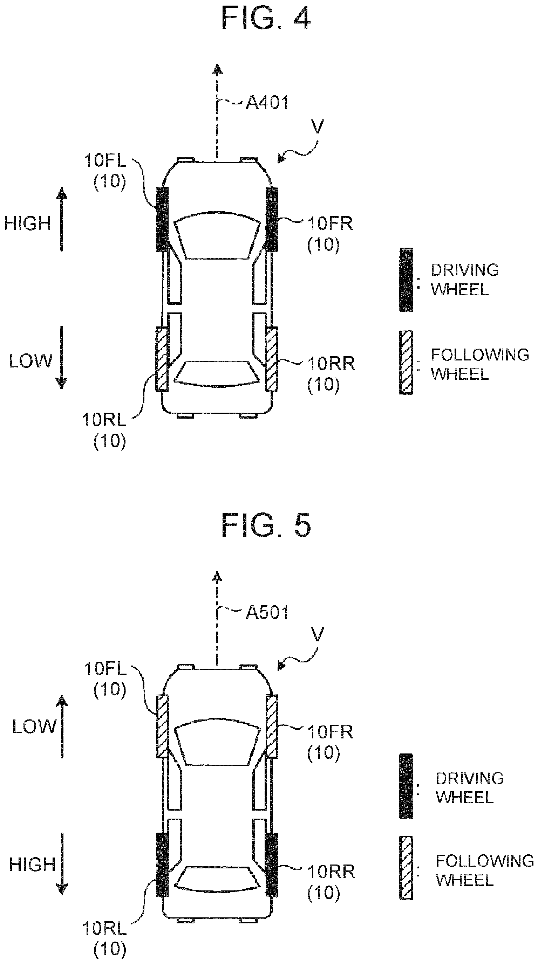

By the way, in the embodiment, as described above, the numbers and positions of the driving wheels and the following wheels can be arbitrarily set and altered. Accordingly, in the embodiment, it is possible to realize a proper estimation of the friction coefficient while stabilizing the behavior of the vehicle V, by appropriately changing setting of the numbers and positions of the driving wheels and the following wheels depending on the traveling state of the vehicle V as shown in FIG. 4 to FIG. 7, for example.

FIG. 4 is an exemplary and schematic diagram showing a first example of the setting of the driving wheel and the following wheel that can be realized in the embodiment. As described below, the setting shown in FIG. 4 is particularly effective in the case where the vehicle V moves on an inclined surface as the road surface in a direction of going up (see an arrow A401). The setting shown in FIG. 4 is effective also in another case (for example, in the case where the vehicle V travels on a flat road as usual). Information of whether the vehicle V moves on the inclined surface in the direction of going up can be acquired based on the detection result of the slope sensor 33 and the like.

In the case where the vehicle V moves on the inclined surface in the direction of going up, instead of driving the rear wheels 10RL, 10RR as rear-side wheels provided on the rear side of the vehicle V in the movement direction of the vehicle V as the driving wheel, by driving the front wheels 10FL, 10FR as front-side wheels provided on the front side of the vehicle V in the movement direction of the vehicle V as the driving wheel, a driving force is generated such that the vehicle V is pulled from the front side. Thereby, meandering (rotation) of the vehicle V can be restrained. Accordingly, in this case, the control circuit 201 controls the driving devices 20, such that the front wheels 10FL, 10FR drive as the driving wheel and the rear wheels 10RL, 10RR follow as the following wheel. Thereby, it is possible to properly estimate the friction coefficient of each of regions on the road surface that correspond to the rear wheels 10RL, 10RR, while stabilizing the behavior of the vehicle V.

In the embodiment, it is only necessary that the front wheels 10FL, 10FR drive as the driving wheel in greater number than the rear wheels 10RL, 10RR. Even by a setting other than the setting shown in FIG. 4, the same effect can be obtained in the case where the vehicle V moves on the inclined surface in the direction of going up. As an example of such a setting, there is a setting in which three wheels of the front wheels 10FL, 10FR and one of the rear wheels 10RL, 10RR drive as the driving wheel and only the other of the rear wheels 10RL, 10RR follows as the following wheel.

FIG. 5 is an exemplary and schematic diagram showing a second example of the setting of the driving wheel and the following wheel that can be realized in the embodiment. The setting shown in FIG. 5 corresponds to a setting in which the setting shown in FIG. 4 is inverted in a front-rear direction. Accordingly, the setting shown in FIG. 5 is particularly effective in the case where the vehicle V moves on the inclined surface as the road surface in a direction of going down (see an arrow A501). The setting shown in FIG. 5 is effective also in another case (for example, in the case where the vehicle V travels on the flat road as usual).

More specifically, in the case where the vehicle V moves on the inclined surface in the direction of going down, instead of driving the front wheels 10FL, 10FR as the front-side wheels provided on the front side of the vehicle V in the movement direction of the vehicle V as the driving wheel, by driving the rear wheels 10RL, 10RR as the rear-side wheels provided on the rear side of the vehicle V in the movement direction of the vehicle V as the driving wheel, a braking force is generated, for example, in regenerative braking, such that the vehicle V is pulled from the rear side. Thereby, the meandering (rotation) of the vehicle V can be restrained. Accordingly, in this case, the control circuit 201 controls the driving devices 20, such that the rear wheels 10RL, 10RR drive as the driving wheel and the front wheels 10FL, 10FR follow as the following wheel. Thereby, it is possible to properly estimate the friction coefficient of each of regions on the road surface that correspond to the front wheels 10FL, 10FR, while stabilizing the behavior of the vehicle V.

In the embodiment, it is only necessary that the rear wheels 10RL, 10RR drive as the driving wheel in greater number than the front wheels 10FL, 10FR. Even by a setting other than the setting shown in FIG. 5, the same effect can be obtained in the case where the vehicle V moves on the inclined surface in the direction of going down. As an example of such a setting, there is a setting in which three wheels of the rear wheels 10RL, 10RR and one of the front wheels 10FL, 10FR drive as the driving wheel and only the other of the front wheels 10FL, 10FR follows as the following wheel.

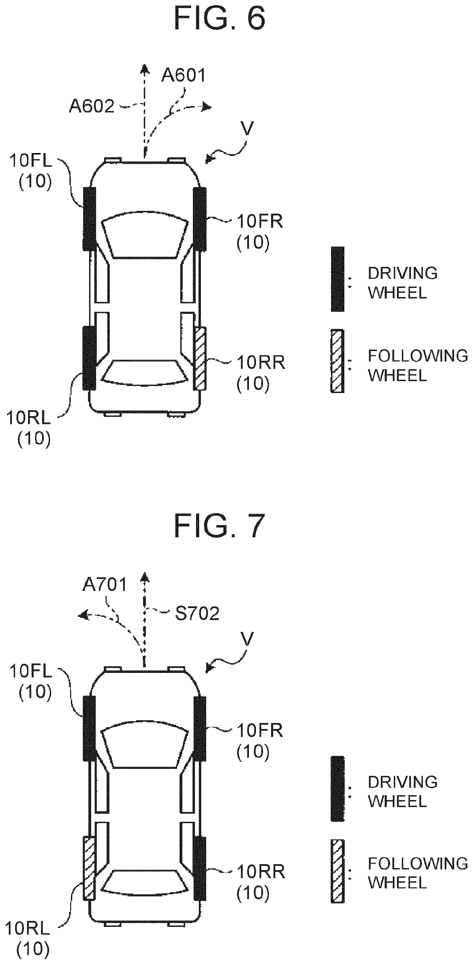

FIG. 6 is an exemplary and schematic diagram showing a third example of the setting of the driving wheel and the following wheel that can be realized in the embodiment. As described below, the setting shown in FIG. 6 is effective in the case where the vehicle V turns right (see an arrow S601). Information of whether the vehicle V turns right can be acquired based on the detection result of the steering sensor 32 and the like.

In the case where the vehicle V turns right, the vehicle V turns smoothly if the front wheel 10FL and rear wheel 10RL as outside wheels provided on the outside of the turning generates a larger driving force than the front wheel 10FR and rear wheel 10RR as inside wheels provided on the inside of the turning. Accordingly, in this case, the control circuit 201 controls the driving devices 20, such that the front wheel 10FL and rear wheel 10RL as both outside wheels and the front wheel 10FR as one inside wheel drive as the driving wheel and the rear wheel 10RR as the other inside wheel follows as the following wheel. Thereby, it is possible to properly estimate the friction coefficient of each of regions on the road surface that correspond to the front wheel 10FL, the front wheel 10FR and the rear wheel 10RL, while stabilizing the behavior of the vehicle V in the right turning.

In the embodiment, it is only necessary that the front wheel 10FL and rear wheel 10RL as the outside wheels drive as the driving wheel in greater number than the front wheel 10FR and rear wheel 10RR as the inside wheels. Even by a setting other than the setting shown in FIG. 6, the same effect can be obtained in the case where the vehicle V turns right. As an example of such a setting, there is a setting in which only the front wheel 10FL and rear wheel 10RL as the outside wheels drive as the driving wheel and the front wheel 10FR and rear wheel 10RR as the inside wheels follow as the following wheel.

The setting shown in FIG. 6 is effective not only in the case where the vehicle V turns right, but also in the case where the vehicle V goes straight (see an arrow S602). Information of whether the vehicle V goes straight can be acquired based on the detection result of the steering sensor 32 and the like.

More specifically, in the setting shown in FIG. 6, both of the front wheel 10FL and rear wheel 10RL as one-side wheels provided along the movement direction on the left side as one side of the vehicle V in a right-left direction of the vehicle V drive as the driving wheel. Accordingly, by the setting shown in FIG. 6, in the case where the vehicle V goes straight, it is possible to estimate the friction coefficient of the same position (region) on the road surface twice, by the front wheel 10FL and rear wheel 10RL that drive as the driving wheel, and therefore it is possible to increase the estimation accuracy of the friction coefficient.

FIG. 7 is an exemplary and schematic diagram showing a fourth example of the setting of the driving wheel and the following wheel that can be realized in the embodiment. The setting shown in FIG. 7 corresponds to a setting in which the setting shown in FIG. 6 is inverted in the right-left direction. Accordingly, the setting shown in FIG. 7 is effective in the case where the vehicle V turns left (see an arrow A701).

More specifically, in the case where the vehicle V turns left, the vehicle V turns smoothly if the front wheel 10FR and rear wheel 10RR as outside wheels provided on the outside of the turning generates a larger driving force than the front wheel 10FL and rear wheel 10RL as inside wheels provided on the inside of the turning. Accordingly, in this case, the control circuit 201 controls the driving devices 20, such that the front wheel 10FR and rear wheel 10RR as both outside wheels and the front wheel 10FL as one inside wheel drive as the driving wheel and the rear wheel 10RL as the other inside wheel follows as the following wheel. Thereby, it is possible to properly estimate the friction coefficient of each of regions on the road surface that correspond to the front wheel 10FL, the front wheel 10FR and the rear wheel 10RR, while stabilizing the behavior of the vehicle V in the left turning.

In the embodiment, it is only necessary that the front wheel 10FR and rear wheel 10RR as the outside wheels drive as the driving wheel in greater number than the front wheel 10FL and the rear wheel 10RL as the inside wheel. Even by a setting other than the setting shown in FIG. 7, the same effect can be obtained in the case where the vehicle V turns left. As an example of such a setting, there is a setting in which only the front wheel 10FR and rear wheel 10RR as the outside wheels drive as the driving wheel and the front wheel 10FL and rear wheel 10RL as the inside wheel follow as the following wheel.

Similarly to the setting shown in FIG. 6, the setting shown in FIG. 7 is effective also in the case where the vehicle V goes straight (see an arrow A702).

More specifically, in the setting shown in FIG. 7, both of the front wheel 10FL and rear wheel 10RL as other-side wheels provided along the movement direction on the right side as the other side of the vehicle V in the right-left direction of the vehicle V drive as the driving wheel. Accordingly, by the setting shown in FIG. 7, in the case where the vehicle V goes straight, it is possible to estimate the friction coefficient of the same position (region) on the road surface twice, by the front wheel 10FR and rear wheel 10RR that drive as the driving wheel, and therefore it is possible to increase the estimation accuracy of the friction coefficient.

By the way, in the settings shown in FIG. 6 and FIG. 7, at least one of the one-side wheels on the left side of the vehicle V and at least one of the other-side wheels on the right side of the vehicle V, more specifically, the front wheels 10FL, 10FR drive as the driving wheel. Accordingly, by the settings, as the friction coefficient of the road surface, it is possible to separately estimate a first friction coefficient that is a friction coefficient of a left-side region as a one-side region on the road surface that corresponds to the one-side wheels and a second friction coefficient that is a friction coefficient of a right-side region as an other-side region on the road surface that corresponds to the other-side wheels.

Therefore, in the embodiment, the control circuit 201 can decide which of the one-side wheels and the other-side wheels drives as the driving wheel in greater number, depending on a magnitude relation between the first friction coefficient and the second friction coefficient.

That is, in the case where the first friction coefficient is smaller than the second friction coefficient, the left-side region is a more slippery region where the driving force that can be transmitted from a single deriving wheel to the road surface is smaller, compared to the right-side region. Therefore, when the one-side wheels disposed at the left-side region drive as the driving wheel in greater number than the other-side wheels disposed at the right-side region, it is possible to secure a driving force necessary for the traveling at the left-side region while the necessary driving force is dispersed, and to stabilize the behavior of the vehicle V. Accordingly, in this case, based on the setting shown in FIG. 6, the control circuit 201 controls the driving devices 20, such that both of the front wheel 10FL and rear wheel 10RL as the one-side wheels and the front wheel 10FR as one of the other-side wheels drive as the driving wheel and the rear wheel RR as the other other-side wheel follows as the following wheel.

Conversely, in the case where the first friction coefficient is larger than the second friction coefficient, the right-side region is a more slippery region where the driving force that can be transmitted from a single deriving wheel to the road surface is smaller, compared to the left-side region. Therefore, when the other-side wheels disposed at the right-side region drive as the driving wheel in greater number than the one-side wheels disposed at the left-side region, it is possible to secure a driving force necessary for the traveling at the right-side region while the necessary driving force is dispersed, and to stabilize the behavior of the vehicle V. Accordingly, in this case, based on the setting shown in FIG. 7, the control circuit 201 controls the driving devices 20, such that both of the front wheel 10FR and rear wheel 10RR as the other-side wheels and the front wheel 10FL as one of the one-side wheels drive as the driving wheel and the rear wheel 10RL as the other one-side wheel follows as the following wheel.

In this way, in the embodiment, depending on the detection result of the in-vehicle sensor, the control circuit 201 appropriately uses one of the settings shown in FIG. 4 to FIG. 7, for example. Thereby, the control circuit 201 can decide the wheel 10 that drives as the driving wheel and the wheel 10 that follows as the following wheel, in a manner suitable for the traveling state of the vehicle V.

In the embodiment, the four-wheel car has been shown as an example of the vehicle V. However, the technology in the embodiment can be applied to vehicles other than four-wheel cars, as long as a plurality of wheels that is independently controlled by the driving device is provided. In this case, also in vehicles other than four-wheel cars, it is possible to obtain the same effective result, by adopting settings in which the settings shown FIG. 4 to FIG. 7 are appropriately modified based on the same idea, as the setting of the numbers and positions of the driving wheels and the following wheels and using one of the settings depending on the traveling state of the vehicle V.

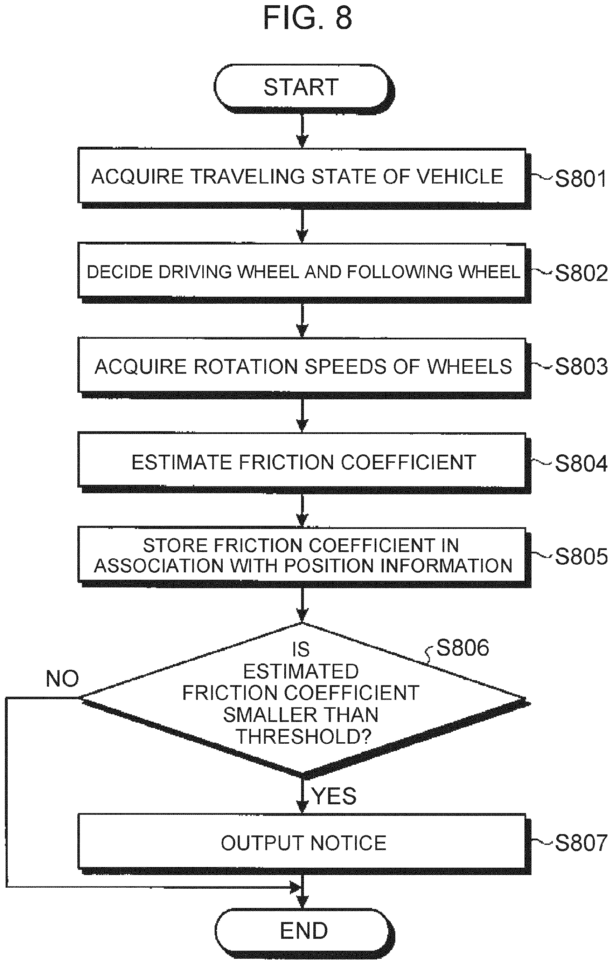

Based on the above configuration, the road surface condition estimation device 200 according to the embodiment executes processes in accordance with a flow shown in FIG. 8.

FIG. 8 is an exemplary and schematic flowchart showing a sequence of processes that is executed by the road surface condition estimation device 200 according to the embodiment for estimating the friction coefficient of the road surface. The sequence of processes shown in FIG. 8 is repeatedly executed while the vehicle V travels.

As shown in FIG. 8, in the embodiment, first, in S801, the acquisition circuit 202 of the road surface condition estimation device 200 acquires the traveling state of the vehicle V based on detection results of various in-vehicle sensors including the wheel speed sensor 31, the steering sensor 32, the slope sensor 33 and the like. For example, the traveling state of the vehicle V is information indicating whether the vehicle V is traveling on the inclined surface, whether the traveling direction of the vehicle V on the inclined surface is the direction of going up or the direction of going down, whether the vehicle V is performing the turning, whether the vehicle is going straight, and the like.

Then, in S802, the control circuit 201 of the road surface condition estimation device 200 decides the number and positions of wheels 10 that function as the driving wheel and the number and positions of wheels 10 that function as the following wheel, depending on the traveling state of the vehicle V acquired in S801, and controls the driving devices 20 in accordance with the decided content.

Then, in S803, the acquisition circuit 202 of the road surface condition estimation device 200 acquires the rotation speeds of the wheels 10, based on the detection results of the wheel speed sensors 31.

Then, in S804, the estimation circuit 203 of the road surface condition estimation device 200 calculates the slip ratio for each driving wheel by the above-described method, based on the information acquired in S803, and estimates the friction coefficient for each region on the road surface that corresponds to the driving wheel, based on the slip ratio.

Then, in S805, the estimation circuit 203 of the road surface condition estimation device 200 stores the friction coefficient estimated in S804, in the storage circuit 203a, in association with the position information relevant to the position of a region for which it is estimated that the friction is generated in accordance with the friction coefficient, that is, a region on the road surface that corresponds to the driving wheel at the time of the estimation of the friction coefficient in S804.

Then, in S806, the output circuit 204 of the road surface condition estimation device 200 determines whether the friction coefficient estimated as a result of the process in S804 is smaller than the threshold. That is, the output circuit 204 determines whether at least one of one or more friction coefficients estimated in S804 is smaller than the threshold.

In the case where it is determined in S806 that the estimated friction coefficient is smaller than the threshold, the process proceeds to S807. Then, in S807, the output circuit 204 of the road surface condition estimation device 200 outputs the notice indicating the warning that the road surface (at least a partial region on the road surface that corresponds to the friction coefficient smaller than the threshold) is slippery, to the occupant of the vehicle V, through the notification circuit 40. Then, the process ends.

In the case where it is not determined in S806 that the estimated friction coefficient is smaller than the threshold, the process ends with no change, without proceeding to S807.

As described above, the road surface condition estimation device 200 according to the embodiment includes the control circuit 201, the acquisition circuit 202 and the estimation circuit 203. The control circuit 201 controls the driving devices 20 that can independently drive the plurality of wheels 10 provided on the vehicle V that travels on the road surface, such that some wheels 10 of the plurality of wheels 10 drive as the driving wheel and the other wheels 10 of the plurality of wheels 10 follow as the following wheel. The acquisition circuit 202 acquires the detection results of the plurality of wheel speed sensors 31 that detects the rotation speeds of the plurality of wheels 10 respectively. The estimation circuit 203 calculates the slip ratio for each driving wheel, based on the detection result of the first wheel speed sensor of the plurality of wheel speed sensors 31 and the detection result of the second wheel speed sensor of the plurality of wheel speed sensors. The first wheel speed sensor detects the rotation speed of the driving wheel, and the second wheel speed sensor detects the rotation speed of the following wheel. The estimation circuit 203 estimates the friction coefficient for each region on the road surface that corresponds to the driving wheel, based on the slip ratio.

With the embodiment, based on the above configuration, it is possible to properly estimate the friction coefficient of the road surface for each region corresponding to the driving wheel, using the four-wheel independent drive vehicle V, regardless of the numbers and positions of the driving wheels and the following wheels.

More specifically, in the embodiment, the estimation circuit 203 calculates the slip ratio for each driving wheel based on the respective rotation speeds of a plurality of driving wheels acquired from the detection result of the first wheel speed sensor and the average value of the rotation speeds of a plurality of following wheels acquired from the detection result of the second wheel speed sensor, when the plurality of driving wheels and the plurality of following wheels exist. With this configuration, it is possible to easily calculate the slip ratio for each driving wheel by collectively considering the rotation speeds of the following wheels with the average and individually considering the rotation speeds of the driving wheels.

In the embodiment, the acquisition circuit 202 acquires the detection results of the wheel speed sensor 31, steering sensor 32 and slope sensor 33 as the in-vehicle sensor that detects the information relevant to the traveling state of the vehicle V, and the control circuit 201 decides the wheel 10 that drives as the driving wheel and the wheel 10 that follows as the following wheel, depending on the detection results of the in-vehicle sensors. With this configuration, it is possible to properly decide the numbers and positions of the driving wheels and the following wheels, in consideration of the traveling state of the vehicle V.

More specifically, in the embodiment, the control circuit 201 can control the driving devices 20 such that the plurality of front-side wheels drives as the driving wheel in greater number than the plurality of rear-side wheels, when the detection result of the in-vehicle sensor indicates that the vehicle V moves on the inclined surface as the road surface in the direction of going up (see FIG. 4). The front-side wheels are included in the plurality of wheels 10 and are provided on the front side of the vehicle V in the movement direction of the vehicle V, and the rear-side wheels are included in the plurality of wheels 10 and are provided on the rear side of the vehicle V in the movement direction of the vehicle V. Further, the control circuit 201 can control the driving devices 20 such that the plurality of rear-side wheels drives as the driving wheel in greater number than the plurality of front-side wheels, when the traveling state of the vehicle V is a state where the vehicle V moves on the inclined surface in the direction of going down (see FIG. 5). With this configuration, at the time of going uphill, the front-side wheels drive as the driving wheel in greater number, and thereby a driving force is generated such that the vehicle V is pulled from the front side. Therefore, it is possible to properly estimate the friction coefficient while stabilizing the behavior of the vehicle V. Further, at the time of going downhill, the rear-side wheels drive as the driving wheel in greater number, and thereby a braking force is generated, for example, in regenerative braking, such that the vehicle V is pulled from the rear side. Therefore, it is possible to properly estimate the friction coefficient while stabilizing the behavior of the vehicle V.

In the embodiment, the control circuit 201 can control the driving devices 20 such that the plurality of outside wheels drives as the driving wheel in greater number than the plurality of inside wheels, when the detection result of the in-vehicle sensor indicates that the vehicle V performs turning (see FIG. 6 and FIG. 7). The outside wheels are included in the plurality of wheels 10 and are provided on the outside of the turning, and the inside wheels are included in the plurality of wheels 10 and are provided on the inside of the turning. With this configuration, the outside wheels generate a larger driving force than the inside wheels, and thereby it is possible to properly estimate the friction coefficient while stabilizing the behavior of the vehicle V at the time of turning.

In the embodiment, when the detection result of the in-vehicle sensor indicates that the vehicle V goes straight, the control circuit 201 can control the driving devices 20, such that at least two of the plurality of one-side wheels drive as the driving wheel or such that at least two of the plurality of other-side wheels drive as the driving wheel (see FIG. 6 and FIG. 7). The one-side wheels are included in the plurality of wheels 10 and are provided along the movement direction on one side of the vehicle V in the right-left direction of the vehicle V, and the other-side wheels are included in the plurality of wheels 10 and are provided along the movement direction on the other side of the vehicle V in the right-left direction of the vehicle V. With this configuration, at least two of the plurality of one-side wheels or at least two of the plurality of other-side wheels drive as the driving wheel, and thereby it is possible to estimate the friction coefficient of the same position (region) twice and to increase the estimation accuracy of the friction coefficient.

In this case, the control circuit 201 can control the driving devices 20 such that at least one of the plurality of one-side wheels and at least one of the plurality of other-side wheels drive as the driving wheel (see FIG. 6 and FIG. 7). The estimation circuit 203 can estimate the first friction coefficient as the friction coefficient of the one-side region on the road surface that corresponds to the plurality of one-side wheels and the second friction coefficient as the friction coefficient of the other-side region on the road surface that corresponds to the plurality of other-side wheels. The control circuit 201 can decide which of the plurality of one-side wheels and the plurality of other-side wheels drives as the driving wheel in greater number, depending on the magnitude relation between the first friction coefficient and the second friction coefficient. With this configuration, for example, the driving wheel is disposed in greater number at a more slippery region that is of the one-side region and the other-side region and where the driving force that can be transmitted from a single driving wheel to the road surface is relatively smaller, than at a less slippery region that is of the one-side region and the other-side region and where the driving force that can be transmitted from a single driving wheel to the road surface is relatively larger. Thereby, it is possible to easily secure a necessary driving force while the necessary driving force is dispersed. Accordingly, it is possible to properly estimate the friction coefficient while stabilizing the behavior of the vehicle V.

In the embodiment, the road surface condition estimation device 200 further includes the output circuit 204 that outputs the predetermined notice through the notification circuit 40 provided in the vehicle V, depending on the result of the comparison between the friction coefficient estimated by the estimation circuit 203 and the threshold. With this configuration, it is possible to easily output the notice to the occupant of the vehicle V, depending on the result of the comparison between the friction coefficient and the threshold.

In the embodiment, the estimation circuit 203 stores the friction coefficient in the storage circuit 203a, in association with the position information relevant to the position of the region on the road surface that corresponds to the driving wheel. With this configuration, it is possible to minutely know the friction coefficient of the road surface for each position.

The embodiment of the disclosure has been described above. The above-described embodiment is just an example, and it is not intended to limit the scope of the invention. The above-described novel embodiment can be carried out in various modes, and various omissions, replacements and alterations can be performed without departing from the spirit of the invention. The above-described embodiment and modifications of the embodiment are included in the scope and spirit of the invention, and are included in a scope of equivalents of the invention described in the claims.

## Claims

1. A road surface condition estimation device (200) comprising:
a control circuit (201) configured to control a driving device (20) that is able to independently drive a plurality of wheels (10), the plurality of wheels (10) being provided on a vehicle (V) that travels on a road surface, the control circuit (201) being configured to control the driving device (20) such that some wheels (10) of the plurality of wheels (10) drive as a driving wheel and the other wheels (10) of the plurality of wheels (10) follow as a following wheel;
an acquisition circuit (202) configured to acquire detection results of a plurality of wheel speed sensors (31) that detects rotation speeds of the plurality of wheels (10) respectively; and
an estimation circuit (203) configured to calculate a slip ratio for each driving wheel, based on a first detection result and a second detection result, the first detection result being a detection result of a first wheel speed sensor of the plurality of wheel speed sensors (31), the first wheel speed sensor detecting a rotation speed of the driving wheel, the second detection result being a detection result of a second wheel speed sensor of the plurality of wheel speed sensors (31), the second wheel speed sensor detecting a rotation speed of the following wheel, the estimation circuit (203) being configured to estimate a friction coefficient for each region on the road surface that corresponds to the driving wheel, based on the slip ratio.

2. The road surface condition estimation device (200) according to claim 1, wherein the estimation circuit (203) is configured to calculate the slip ratio for each driving wheel, based on the respective rotation speeds of a plurality of the driving wheels acquired from the first detection result and an average value of the rotation speeds of a plurality of the following wheels acquired from the second detection result, when the plurality of driving wheels and the plurality of following wheels exist.

3. The road surface condition estimation device (200) according to claim 1 or 2, wherein:
the acquisition circuit (202) is configured to acquire a third detection result, the third detection result being a detection result of an in-vehicle sensor (31, 32, 33) that detects information relevant to a traveling state of the vehicle (V), the in-vehicle sensor (31, 32, 33) including the plurality of wheel speed sensors (31) configured to detect the rotation speeds of the plurality of wheels (10) respectively; and
the control circuit (201) is configured to decide the wheels (10) that drive as the driving wheel and the wheels that follow as the following wheel, depending on the detection result of the in-vehicle sensor (31, 32, 33).

4. The road surface condition estimation device (200) according to claim 3, wherein:
the control circuit (201) is configured to control the driving device (20) such that a plurality of front-side wheels (10FL, 10FR) drives as the driving wheel in greater number than a plurality of rear-side wheels (10RL, 10RR), when the detection result of the in-vehicle sensor (31, 32, 33) indicates that the vehicle (V) moves on an inclined surface as the road surface in a direction of going up, the front-side wheels (10FL, 10FR) being included in the plurality of wheels (10) and being provided on a front side of the vehicle (V) in a movement direction of the vehicle (V), the rear-side wheels (10RL, 10RR) being included in the plurality of wheels (10) and being provided on a rear side of the vehicle (V) in the movement direction of the vehicle (V); and
the control circuit (201) is configured to control the driving device (20) such that the plurality of rear-side wheels (10RL, 10RR) drives as the driving wheel in greater number than the plurality of front-side wheels (10FL, 10FR), when the traveling state of the vehicle (V) is a state where the vehicle moves on the inclined surface in a direction of going down.

5. The road surface condition estimation device (200) according to claim 3 or 4, wherein the control circuit (201) is configured to control the driving device (20) such that a plurality of outside wheels drives as the driving wheel in greater number than a plurality of inside wheels, when the third detection result indicates that the vehicle (V) performs turning, the outside wheels being included in the plurality of wheels (10) and being provided on an outside of the turning, the inside wheels being included in the plurality of wheels (10) and being provided on an inside of the turning.

6. The road surface condition estimation device (200) according to any one of claims 3 to 5, wherein the control circuit (201) is configured to execute one of a first driving control and a second driving control, when the third detection result indicates that the vehicle (V) goes straight, the first driving control being a control of controlling the driving device (20) such that at least two of a plurality of one-side wheels drive as the driving wheel, the one-side wheels being included in the plurality of wheels (10) and being provided along a movement direction on one side of the vehicle in a right-left direction of the vehicle, the second driving control being a control of controlling the driving device such that at least two of a plurality of other-side wheels drive as the driving wheel (10), the other-side wheels being included in the plurality of wheels (10) and being provided along the movement direction on the other side of the vehicle in the right-left direction of the vehicle.

7. The road surface condition estimation device (200) according to claim 6, wherein:
the control circuit (201) is configured to control the driving device such that at least one of the plurality of the one-side wheels and at least one of the plurality of the other-side wheels drive as the driving wheel;
the estimation circuit (203) is configured to estimate a first friction coefficient as a friction coefficient of a one-side region on the road surface that corresponds to the plurality of the one-side wheels and a second friction coefficient as a friction coefficient of an other-side region on the road surface that corresponds to the plurality of the other-side wheels; and
the control circuit (201) is configured to decide which of the plurality of the one-side wheels and the plurality of the other-side wheels drives as the driving wheel in greater number, depending on a magnitude relation between the first friction coefficient and the second friction coefficient.

8. The road surface condition estimation device (200) according to any one of claims 1 to 7, further comprising an output circuit (204) configured to output a predetermined notice through a notification circuit (40) provided in the vehicle, depending on a result of comparison between the friction coefficient estimated by the estimation circuit (203) and a threshold.

9. The road surface condition estimation device (200) according to any one of claims 1 to 8, wherein the estimation circuit (203) is configured to store the friction coefficient in a storage circuit (203a), in association with position information relevant to a position of the region on the road surface that corresponds to the driving wheel.
